# EUROPEAN PATENT SPECIFICATION

(11) **EP 1 819 137 B1**
(45) Date of publication and mention of the grant of the patent: **01.09.2010**
(21) Application number: 06290248.1
(22) Date of filing: 13.02.2006
(51) Int. Cl.: H04L 12/58, H04M 3/533

(54) **Method of providing an automatic reply message**
Verfahren zum Bereitstellen einer automatischen Antwortnachricht
Procédé pour fournir un message de réponse automatique

(43) Date of publication of application: 15.08.2007
(73) Proprietor: Alcatel Lucent, 75008 Paris (FR)
(72) Inventor: Bonnaud, Fabrice, 29260 Le Folgoet (FR); Moitier, Pierrick, 29200 Brest (FR)
(74) Representative: Schmidt, Werner Karl

(56) References cited:
- EP-A- 1 331 799
- EP-A- 1 511 250
- WO-A-99/56450
- US-A1- 2002 015 418
- US-A1- 2002 090 069
- US-A1- 2003 193 558
- US-B1- 6 687 340

## Description

The present invention relates to a method of providing an automatic reply message to a calling party, and a system for executing the method.

Known methods and systems can be seen in documents US-A-2003/93558, WO-A-9956450, EP-A-1331799 and US-A-2002 090069.

Today's business workers tend to use several communication media for communication purpose: an email client, a business phone with a voice mail, a mobile phone with another voice mail or SMS, an IM software, et cetera (SMS = Short Message Service; IM = Instant Messaging). When calling parties try to contact a business worker during his vacation, their communication request will not be answered. Thus, the calling parties do not know when the business worker will be back and whom to contact meanwhile to handle their matters.

Some business workers, before they go on vacation, write an auto-reply message for vacation programs of each mailbox, e.g., for auto-reply applications of email and SMS, and record a voice reply message for each voice mail, e.g., for the telephone answering machine, the voice mailbox of the business phone, and the voice mailbox of the mobile phone. By means of these messages, a calling party who tries to contact a business worker is informed about the first day and the last day of the time period the called party is out of office, and about one or more substitutes the calling party may contact instead, preferably a separate substitute for each matter the called party is in charge of.

Usually, recording a specific voice prompt is so boring that the business worker activates the forward to his voice mailbox with default prompt. Therefore a calling party will not receive the relevant data about the business worker just because the handling of the auto-reply message is too cumbersome.

Furthermore, there may be no consistency of the auto-reply messages for all media or devices. The auto-reply message must be written for each vacation because the dates of beginning and end of the vacation are different each time and the subject a business worker is in charge of may change. The same data, e.g., days, substitutes and substitutes' telephone numbers, must be written or recorded several times for all media or devices: for each mailbox, for each voice message box. So the different auto-reply messages may not be consistent. Furthermore, the business worker must not forget to activate the auto-reply service before he leaves his office to go on vacation.

Another presently used solution is that a presence server publishes the present status of a user for phone calls or IM messages. IM message client software can be improved thanks to plug-ins with auto-reply features, such as Yahoo Pal add-on program. However an add-on program has to be installed on the user devices. From the installer's point of view, this solution is very restrictive due to compliance problems, regularly required updates, et cetera.

It is the object of the present invention to provide an improved method of providing an automatic reply message.

The object of the present invention is achieved by a method of providing an automatic reply message to a calling party trying to get in connection with a called party by using a communication media, wherein the method comprises the steps of creating a raw data message from data provided by the called party, and generating said automatic reply message by adapting said raw data message to the used communication media. The object of the present invention is further achieved by a system for providing an automatic reply message to a calling party trying to get in connection with a called party by using a communication media, whereby the system comprises a control unit adapted to create a raw data message from data provided by the called party and generate said automatic reply message by adaptation of said raw data message to the used communication media by means of a media unit.

Although the term "calling party" is used, the calling party is not restricted to a telephone. Instead, a calling party in the sense of the present invention may use any telecommunication media. Therefore, the term "call" in the sense of the invention comprises all contact signals (calls, messages, etc.) intended to be received by the called party, e.g., an email, an SMS, an IM, or a telephone call. Generally, the term "calling party" is meant to refer to any party who tries to contact the called party by means of an electric communication media and initiates a call or sends a message for this purpose to the called party. In analogy, the term "called party" is meant to refer to any party who is the communication target of a calling party.

The present invention provides an automatic creation of an auto-reply message. A subscriber to the service of automatic creation of an auto-reply message, e.g., a business worker, needs not activate the service when he leaves his office to go on vacation. By means of the invention, the content of the automatic reply message is consistent for all devices and all media. The processing is centralised on the server side, so nothing is to install on the user side or client side. Furthermore, the auto-reply message can be easily improved by adding a quick access to call a substitute.

The present invention greatly improves the efficiency of communication flows in a company. It is user-friendly, user-centric, and multimedia and multi-device enabled.

Further advantages are achieved by the embodiments of the invention indicated by the dependent claims.

According to a preferred embodiment, the called party sends the data to the system, possibly an interface for the reception of called party data. The data received by the system are stored in one or more databases which may be accessed by the control unit for the creation of said raw data message. Preferably the called party is allowed to provide data to the system in any communication media and via any terminal. For instance, the called party may provide said data as text and/or video and/or audio and/or multimedia data. Also the called party may use any terminal he has available to transfer the data to the automatic reply message system.

Preferably the called party provides data related to a period of non-availability of the called party. It is also possible that the called party provides data related to an activity of the called party, e.g., business trip, vacation, absence because of illness, etc., and/or a substitute for the called party. Before leaving office, the called party may establish a connection via a communication media to the system and fill an absence database comprising absence plans with dates of the absence period, e.g., the first day and the last day of the out-of-office period. Furthermore, before leaving office, the called party may get connected to the system and fill a knowledge database storing activities and substitutes of the called party with the subjects he is in charge of and the one or more substitutes responsible for specific subjects.

According to a preferred embodiment, the control unit parses the received data from the called party and selects relevant data, e.g., based an a keyword scheme or a context related recognition approach. The control unit inserts one or more data elements of said data into a pre-defined data structure, e.g., a data object tree. Based on the existing entries in the data structure, the control unit recognises an action of the called party, e.g., a vacation, a business trip, or a relocation of the called party and selects an appropriate template of said raw data message according to the entries of the data structure. The control unit composes said raw data message by assembling the selected template with the entries of the data structure.

It is also possible that the called party sends the data to the control unit. Then the control unit creates a raw data message from the received data and stores the raw data message in a database. Once a call from a calling party is received, the control unit determines the availability of the called party. In case the called party is not available, the control unit retrieves the raw data message from the database and adapts the raw data message according to the characteristics of the received call, i.e., to the used communication media, the identity of the calling party, the subject indicated in the call, etc.

For the adaptation of the raw data message, the communication media used by said calling party and the identity of said called party is determined. The call received from the calling party is analysed and the data relevant for the provisioning of an automatic reply message are extracted from the call. The communication media may be determined by or in depencence on a corresponding media server. If the calling party uses email to get in connection with the called party, the associated call will be received by an email server. Thus, the control unit will recognise the communication media as email, etc.

The identity of said called party is determined by extracting address information from the call and/or the signalling traffic associated with the call. Preferably, the address of the called party may be again determined by or in depencence on a corresponding media server. Once the identity of the called party is known, the data associated to the called party are accessed on the databases and the data are retrieved. The data are used for the generation of the automatic reply message which is sent to the calling party by means of the used communication media.

In a preferred embodiment, the system comprises a set of interfaces to receive data via different communication media. The system may also comprise means to translate the received data to an internal data format and representation, or may be adapted to process data in different formats and representations. Due to the extensive communication means to reach the system, the system may be fed with data from the called party from any place, via any communication media, and at any time.

In another preferred embodiment the automatic reply message sent to the calling party comprises information about the period of non-availability of the called party and/or one or more substitutes of the called party. The calling party may have tried to contact the called party in a call or by means of a message via any communication media, e.g., by dialling a telephone number of the called party on his telephone set or by sending an email addressed to an email address of the called party and captioned with a specific subject, e.g., the name of a project the calling party wants to ask the called party about.

The system is adapted to receive a call from a calling party's terminal of any technology and via any of a plurality of different communication media based on textual and/or video and/or audio and/or multimedia content. In reply to this call or message, the system will the send the corresponding automatic reply message to the calling party via the same communication media it has received the call from. For instance, if the calling party uses email to contact the called party, the automatic reply message will be issued as an email message. If the calling party tries to call the called party through a voice telephone call, the automatic reply message received by the calling party will be also a voice telephone message.

According to a preferred embodiment of the invention, the automatic reply message is adapted in dependence on the calling party and/or a subject of a call received from the calling party. For example, if the calling party is not from the same company as the called party, an auto-reply message will be generated which refers the calling party to a central reception site where the decision may be made what information can be revealed to the calling party. On the other hand, if the calling party is from the same company as the called party, the auto-reply message will provide the calling party with a full choice of substitutes.

Likewise, a calling party who is not associated to the company will not be informed by the auto-reply message about the whereabouts of the called party because this information may reveal confidential knowledge of the company; in that case, it may be sufficient to inform the calling party about the day the called party is in office again and to refer the calling party to the receptionist. On the other hand, a colleague of the called party may be exactly told where the called party is. Furthermore, it is possible that the auto-reply message tells the calling party different substitutes depending on the subject of his call, e.g., mentioned in the header of an email.

Preferably the system provides an automatic reply message if the system detects that the called party is currently not available, i.e., is not able to answer the communication request of the calling party himself. The system may read the called party's dates of absence from the absence database and automatically enable the auto-reply feature. The one or more databases storing the called party's agenda, i.e., the data provided by the called party, may be a proprietary messaging solution of a company.

Preferably the system is easily integrated into an existing communications network. The system can be installed as an additional, separate component of an existing communication network and activated whenever needed. Due to the architecture of the system, it needs not be installed on the users' devices. However, the system will co-operate with any resource, servers and/or network nodes, of an existing communications network.

In a preferred embodiment, the system comprises a dedicated control unit providing the functions of the automatic reply message service with support from auxiliary units such as a media unit and a database. All functions needed for the automatic reply message service are provided by dedicated units operating independently from network nodes and network servers of the network environments and separately installed for the service only.

In another embodiment, it is also possible that the control unit provides control functions and other basic functions, and that additional functions required for the generation of an automatic reply message, such as reception and sending of messages, storage of data, adaptation to different communication media, are "outsourced" by the control unit to already existing modules of a communications network. Generally, it is also possible that the control unit and one or more units of the system are units dedicated to the generation of an automatic reply message, and that one or more units of the system are network units which do not only service the auto-reply message system but also operate within a common communication network context independently from the described system.

Theses as well as further features and advantages of the invention will be better appreciated by reading the following detailed description of the presently preferred exemplary embodiments taken in conjunction with accompanying drawings of which:
- Fig. 1: is a block diagram of a system according to an embodiment of the invention.
- Fig. 2: is a message flow diagram showing the steps to execute the method according to another embodiment of the invention.

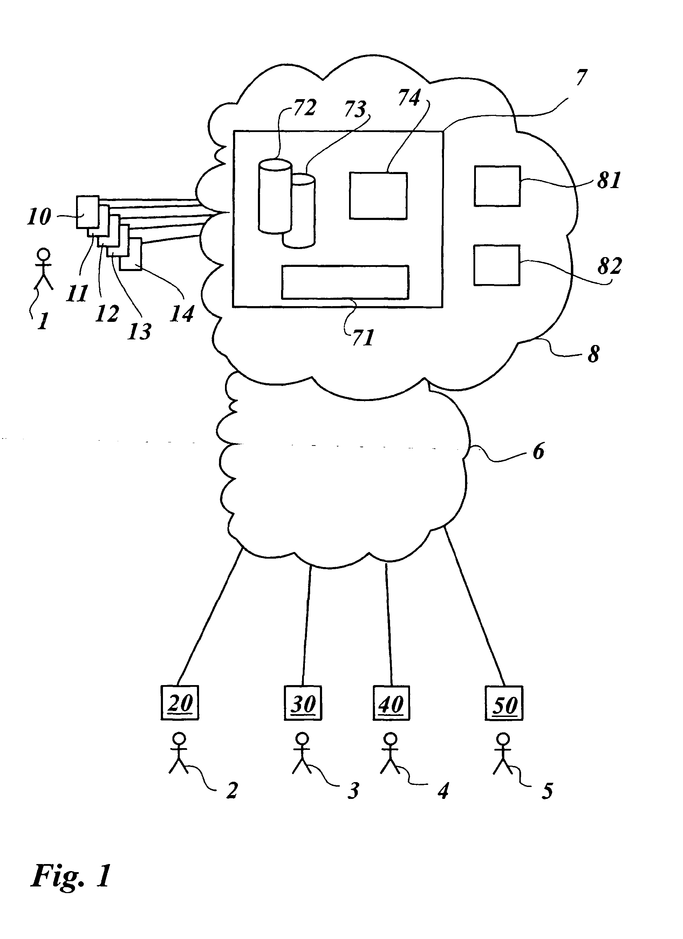

Figure 1 shows a called party 1 who is associated to several communication devices 10 to 14 making use of different communication media. For example the device 10 may be a GSM mobile telephone device which can be used to conduct GSM telephone calls and to send SMS messages (GSM = Global System for Mobile Communications). The device 11 may be desktop workstation which operates an email client for sending and receiving emails. The device 12 may be a business phone for conducting telephone calls over a wireline telephone network such as the PSTN (PSTN = Public Switched Telephone Network). The device 13 may be a laptop computer which can be used to send and receive emails via a WLAN (WLAN = Wireless Local Area Network). The device 14 may be a PDA which can be used to send and receive instant messages (PDA = Personal Digital Assistant).

The devices 10 to 14 are connected to a communications network 8, either through a wireline or a wireless connection. The communications network 8 may be a telecommunications network which is adapted to transmit packet based and circuit based communication data. For example the communications network 8 may be used to transmit text and/or video and/or audio and/or multimedia communication traffic. The communications network 8 comprises a call server 81 for control of the routing processes within the communications network 8, and a routing unit 82.

The communications network 8 further comprises a system 7 for the provisioning of an automatic reply message, in the following shortly called "auto-reply system", the auto-reply system 7 comprising a control unit 71, databases 72 and 73 and a media unit 74. The auto-reply system 7 cooperates with network resources of the hosting communications network 8, particularly the resources of the call server 81 and the routing unit 82. Preferably, the routing unit 82 is a routing service interface of the call server 81. In another embodiment, the routing unit 82 may be an integral part of the auto-reply system 7.

The auto-reply system 7 may be a stand-alone entity deployed within the communications network 8 or it may be integrated into another unit of the communications network 8. Preferably the control unit 71 and the media unit 74, respectively, is a control server and a media server, respectively, which is composed of one or several interlinked computers, that means a hardware platform, a software platform basing a based on the hardware platform and several application program executed by the system platform formed by the software and hardware platform. The functionalities of the control unit 71 and the media unit 74, respectively, are provided by the execution of these application programs. The application programs or a selected part of these application programs constitute a computer software product providing a control service and a media service, respectively, as described in the following and executed in the system platform. Further, such computer software product is constituted by a storage medium storing these application programs or that selected part of the application programs.

The control unit 71 controls the execution of an automatic reply message service. For this purpose, the control unit 71 exchanges data with the databases 72 and 73, the media unit 74, the call server 81, and the routing unit 82.

The database 72 is an absence database and stores data related to periods of absence and non-availability of called parties. The database 73 is a knowledge database storing activities of called parties and substitutes for called parties. Each called party who wants to make use of the automatic reply message service first has to open a user account. Once a user account for a called party is opened, the called party can fill the user account with user-specific data related to the automatic reply message service. The called party 1 transmits data to the databases 72 and 73 via one of her devices 10 to 14.

The call server 81 is a call control server controlling the set-up and processing of calls through the communications network 8. The media unit 74 has capabilities to adapt data to specific communication needs, e.g., by transforming data from one communication media to another communication media. For instance, a text may be converted into audio data by means of a text-to-speech converter of the media unit 74.

In another embodiment, it is possible that the media unit 74 is not a dedicated unit of the auto-reply system. The media unit 74 may be one or more different media servers of the network 8 whereby each of the media servers handles data traffic associated to a specific communication media in the networks 6 and 8. For example, one of the media servers may be an email server of the network 8 for the handling of emails, another media server may be a mobile telecommunications call server of the network 8, another media server may be an SMS server of the network 8, etc.

The routing unit 82 extracts information from received communication messages and traces received communication messages back to their origin.

The auto-reply system 7 can be reached by a plurality of calling parties 2 to 5 by means of communication terminals 20, 30, 40 and 50 via one or more existing communications networks 6 and 8, preferably via different access networks. For example the communication terminal 20 assigned to the calling party 2 may be a wireline telephone for making telephone calls. The communication terminal 30 assigned to the calling party 3 may be an email client on a work station for sending emails. The communication terminal 40 assigned to the calling party 4 may be a laptop computer for sending IM messages, and the communication terminal 50 assigned to the calling party 5 may be a GSM mobile telephone for sending SMS messages.

Between the calling parties 2 to 5 and the called party 1, communication connections may be established through the existing communications networks 6 and 8, whereby the call server 81 represents a central control unit. However, in decentralised communications networks, the functions of the call server 81 will be taken over by one or more network nodes operating and handling the transport of communication data.

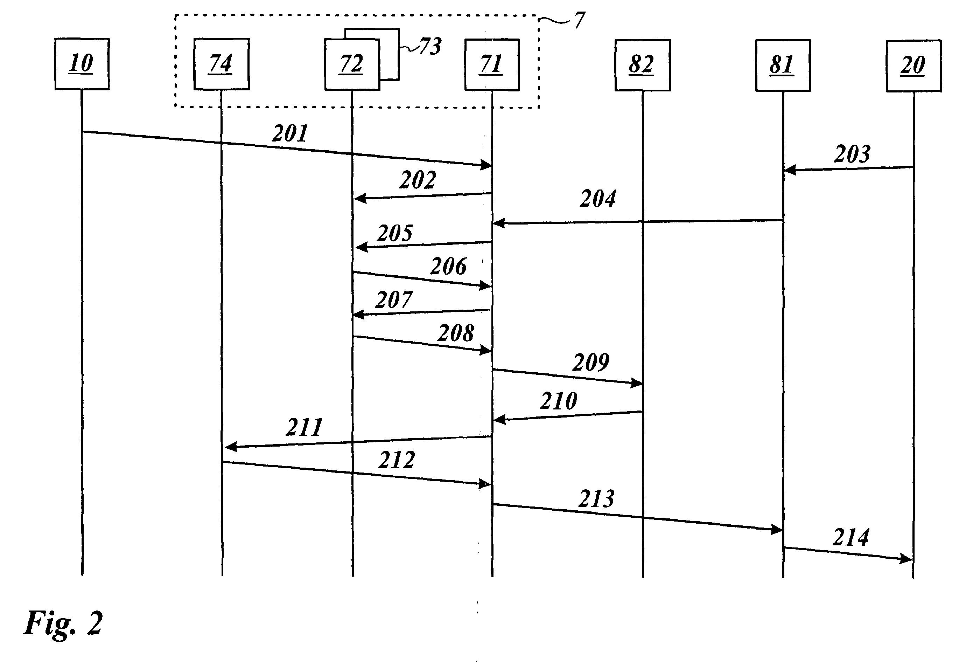

Figure 2 shows the steps needed for the provision of an automatic reply message according to an exemplary embodiment of the invention. In a first step 201, the called party 1 accesses the control unit 71 through one of her devices 10 to 14. It is possible that the called party 1 uses an application installed on her communication devices 10 to 14, e.g., a web access on her PC or PDA or a telephony interface. According to Figure 2, the called party 1 uses her GSM telephone device 10 to send a message 201 to the control unit 71.

The called party's 1 name is "Helen" and she is going to leave her office for four days, July 6th to July 9th, because of a business trip. By means of the message 201, the called party 1 send the dates of non-availability and her activities and substitutes for this period of non-availability to the control unit 71.

For example, the called party 1 may call a pre-defined telephone number assigned to her user account on the auto-reply system 7. Then, the called party 1 may speak the first day and the last day of her absence, i.e., "July 6 - July 9". Then, the called party 1 may speak the reason of her absence, and responsability subjects and the corresponding substitute in her company, i.e., "business trip - Activity 1 Person 1 - Activity 2 Person 2 - Activity 3 Person 3."

Preferably, the called party 1 also states details of her business trip. For example, the called party 1 leaves the office for a business trip lasting several days in order to visit several branch offices around the country. Thus, the called party 1 will define the exact names of the companies she will visit during her business trip. The control unit 71 may be adapted to receive a variety of different data, preferably by means of the media unit 74. Preferably, the called party 1 may modify her user account according to her needs and to a desired complexity.

To facilitate the input of data, the called party 1 may modify an interface of the control unit 71 accepting her data inputs in such a way that the called party 1 is prompted to give answers to questions asked by an application running on the control unit 71. For example, an application will ask questions like: "When is your first day of absence?", "When is your last day of absence?", "How many different whereabouts will you be located at during your absence?", "Please state your first whereabout.", " When is your first day at the first whereabout?", etc. Then the answers provided by the called party 1 to these questions will be inserted into a data structure.

It is also possible that the called party 1 provides the data in an arbitrary manner, and that the control unit 71 is able to recognise the significance of the data elements. For example, the called party may send an email to the control unit 71 with the following text: "Business trip from July 6 - July 9. Beville, Aville, Ceville, Deville. Activity 1 Person 1 - Activity 2 Person 2 - Activity 3 Person 3. In emergency call me on my cell phone." The control unit 71 will recognise the significance of the words, e.g., by a text recognition system using a syntax and semantics analysis approach.

Further, it is possible that the called party 1 also indicates contact addresses of substitutes. In a preferred ambodiment, however, the auto-reply system 7 is able to retrieve the corresponding contact addresses without the assistance of the called party 1 from other databases, e.g., a company-owned proprietary telephone directory. It is also possible that the system comprises only one database and that all data - period of non-availability, reason of absence, subjects, substitutes, etc. - are sent to one account on the one database.

In a second step 202, the control unit 71 sends the data received from the terminal 10 of the called party 1 to the absence database 72 and the knowledge database 73 where the data are stored. It is also possible that the control unit 71 first creates a raw data message from the data received from the terminal 10 of the called party 1 and sends the created raw data message to the databases 72 and 73. Preferably, the control unit 71 both sends the created raw data message and the data received from the terminal 10 of the called party 1 to the absence database 72 and the knowledge database 73 where the data are stored.

On the second day of the called party's 1 absence from the office, i.e., on July 7th, the calling party 2 may use his communication terminal 20 to send a call establishment request for communication with the called party 1. The calling party 2 may trigger the communication terminal 20 to send a call establishment request message 203 to an address assigned to one of the devices 10 to 14 of the called party 1. The call establishment request message 203 will be received by the call server 81 of the communications network 8.

When the auto-reply system 7 is installed in the communications network 8, the call server 81 is modified according to the requirements of an operation of the auto-reply system 7 in the communications network 8. By default, the call server 81 may send, on a reception of the call establishment request message 203 a message 204 to the control unit 71. The control unit 71 accesses in an access action 205 the databases 72 and 73 to determine the dates of non-availability of the called party 1. It is possible that the control unit 71 checks the absence database 72 categorically at every incoming call. It is also possible that the control unit 71 checks the absence database 72 regularly, e.g., once a day. Alternatively, it is also possible that the control unit 71 checks the absence database 72 when a first call arrives after the called party 1 has filled the absence database 72 with dates. The control unit 71 then reads the absence dates and does not refer to the databases 72 and 73 any more until the last day of the absence. Preferably, this solution may only be implemented if the called party 1 is not enabled to update the dates of non-availability later.

For example, the called party 1 is on a business trip, but unexpectedly her return to the office is delayed. The called party 1 may use any telephone to call a telephone number assigned to her user account on the absence database 72. The called party 1 modifies the day of return to the office stored in her user account on the absence database 72. If the control unit 71 checks the absence database 72 categorically at every incoming call, this change in the absence database 72 will be detected immediately and used for the reply to incoming calls. However, if the control unit 71 accesses the database 72 less often, the absence update will be detected only later.

Accessing the database 72, the control unit 71 finds data in the user account of the called party 1 and retrieves the data from the absence database 72 in a retrieval action 206. The control unit 71 compares the current date with the dates of non-availability retrieved from the database 72. Because the call establishment request message 203 is received during a period of non-availability of the called party 1, the control unit 71 realises that the called party 1 is absent and that the automatic reply message service has to produce an automatic reply message to be sent to the communication device 20 of the calling party 2.

The control unit 71 accesses in an access step 207 the user account of the called party 1 on the knowledge database 73 and retrieves in a retrieval step 208 the stored data associated to the called party 1, i.e., the reason of absence, the subjects the called party 1 is in charge of and the substitute of the called party 1 for each subject. In another embodiment, the control unit 71 accesses in an access step 207 the user account of the called party 1 on the databases 72 and 73 and retrieves in a retrieval step 208 the stored raw data message associated to the called party 1.

The control unit 71 further sends a trigger signal 209 to the routing unit 82 to cause the routing unit 82 to determine the identity of the calling party 2. Based on the address of the calling party's communication terminal 20 comprised within the received call establishment request message 203, the routing unit 82 determines, e.g., by means of telephone directory databases, that the communication terminal 20 where the received call establishment request message 203 originates is a telephone set that belongs to the company of the called party 1. The routing unit 82 sends this origin information as message 210 to the control unit 71.

With this origin information and by using the data retrieved from the absence database 72 and the knowledge database 73, the control unit 71 fills a data structure comprising data entry fields for common entries like reason of absence, first day of absence, last day of absence, locations during absence, 1 st project, 1 st substitute, 2nd project, 2nd substitute, emergency contact address, etc. Based on key entries like reason of absence, the control unit 71 will select a template of a raw data message. A template of a raw data message assigned to a called party who is on vacation may differ from a template of a raw data message assigned to a called party who is on a business trip.

Once the template is chosen, the entries of the data structure are fit within the template to create a user-specific unique raw data message. For instance, if the called party 1 is on vacations, the system creates the following unique raw data message where the elements retrieved from the data structure are put into parentheses while the other text elements are provided from the raw data message template:
"[Helen] is on vacation from [July 6] to [July 9].
For [activity 1], please contact [person 1].
For [activity 2], please contact [person 2].
For [activity 3], please contact [person 3].
Emergency contact: [Helen] [mobile phone]"

If the called party 1 is on a business trip, the system creates the following unique raw data message where the elements retrieved from the data structure are put into parentheses while the other text elements are provided from the raw data message template:
"[Helen] is on a business trip from [July 6] to [July 9].
Today, [Helen] is at [company ABC] in [Aville].
For [activity 1], please contact [person 1].
For [activity 2], please contact [person 2].
For [activity 3], please contact [person 3].
Emergency contact: [Helen] [mobile phone]."

Thanks to the routing unit 82, the auto-reply system 7 extracts information from the call or message received from the calling party 2 in order to complete or adapt the automatic reply message with dedicated information for a particular calling party 2. For example, the routing unit 82 identifies the calling party's identity during the call set-up using CLID (= calling line identification). If the origin information of the call indicates that the calling party 2 is a caller from outside of the company, the control unit 71 creates the following unique raw data message:
"Helen is out of the office from July 6 to July 9.
For activity 1, please contact person 1.
For activity 2, please contact person 2.
For activity 3, please contact person 3."

If the received call establishment request message 203 comprises a subject, usually with a textual call such as an email, the control unit 71 may use also this information to tailor the raw data message to the specific call. For instance, if the subject relates to activity 2, the control unit 71 creates the following unique raw data message for an email sender from within the company:
"Helen is on a business trip from July 6 to July 9.
Today, Helen is at company ABC in Aville.
Please contact person 2."

It is possible that the raw data message is adapted in a second step to the communication media used by the calling party 2. Then, the control unit may choose templates that already take into consideration the specific needs and standards of the different communication media. Thus, a raw data message adapted to email will be identical to the standard raw data message while a raw data message adapted to a telephone call will be:
"Thank you for calling company XYZ.
Helen is on a business trip from July 6 to July 9.
For activity 1, please contact person 1.
For activity 2, please contact person 2.
For activity 3, please contact person 3."

Then, the control unit 71 sends the generated raw data message as a message 211 to the media unit 74 where the raw data message is adapted to the communication media used by the calling party 2. It is adapted to an email if the calling party 2 has sent an email through a connection with an email server. It is vocalised for a voice reply message, thanks to a text-to-speech service from the media unit 74, if the calling party 2 has called by telephone. It is translated into an IM message if an IM call was received from the calling party 2 through a connection with an IM server. It is translated into SMS on SMS reception through a connection with a PLMN network (PLMN = Public Land Mobile Network).

It is also possible that the media unit 74 has an extended functionality. The media unit 74 may be able to adapt a raw data message to a specific communication media not only by converting the raw data message into a media format but also to add media specific components and/or text/voice elements. In a specific embodiment, where the calling party 2 has used a telephone 20 to reach the called party 1, the media unit 74 will adapt the raw data message to a voice message. In case the caller 2 is a fellow worker of the called party 1, the media unit 74 will adapt the raw data message to the following exemplary voice message:
"Helen is on a business trip from July 6 to July 9.
Today, Helen is at company ABC in Aville.
For activity 1, please call person 1 on tel # 123.
For activity 2, please call person 2 on tel # 456.
For activity 3, please call person 3 on tel # 789.
In urgent cases, you may reach Helen on her mobile
phone via tel # 123-456 7890"

In case the calling party 2 is a caller from outside who is not associated to the company of the called party, the media unit 74 will adapt the raw data message to the following exemplary voice message:
"Thank you for calling company XYZ.
Helen is out of the office from July 6 to July 9.
Meanwhile, our receptionist Ms Mozart will be
pleased to take care of you.
Please hold the line, you will be forwarded."

The media-adapted automatic reply message is then sent back as message 212 to the control unit 71. From there, the control unit 71 sends the automatic reply message in a data transmission step 213 to the call server 81. Finally, the call server sends the automatic reply message as a voice message 214 to the communication device 20 where the calling party 2 originated the call establishment request message 203 from.

If the auto-reply system 7 is implemented to a mobile telecommunications system, the voice prompt of a cellular voice mail is modified through the API provided by the NGN (API = application programming interface; NGN = next generation network).

## Claims

1. A method of providing an automatic reply message to a calling party (2 to 5) trying to get in connection with a called party (1) by using a communication media,
the method comprising the steps of:
creating a raw data message from data provided by the called party (1); and
generating said automatic reply message by adapting said raw data message to the used communication media by converting the raw data message into a media format,
whereby the method comprises the further steps of:
fitting one or more data elements of said data provided by the called party (1) into a pre-defined data structure;
selecting a template of the raw data message according to the entries of the data structure;
composing the raw data message by assembling the template with the entries of the data structure whereby the entries of the data structure are fit within the template to create the user-specific unique raw data message; and
creating said raw data message based on data related to a period of non-availability of the called party (1) and/or data related to an activity of the called party (1) and/or a substitute for the called party (1).

2. The method of claim 1,
**characterised in**
**that** the method comprises the further step of:
receiving said data provided by the called party (1) as textual and/or
video and/or audio and/or multimedia data via a terminal (10 to 14) of the called party (1); and
storing the received data in one or more databases (71, 72) accessible for the creation of said raw data message.

3. The method of claim 1,
**characterised in**
**that** the method comprises the further steps of:
determining the communication media used by said calling party and the identity of said called party (1);
accessing one or more databases storing the data provided by the called party (1) and retrieving said data;
sending said automatic reply message to the calling party (2 to 5) by means of the used communication media.

4. The method of claim 1,
**characterised in**
**that** the method comprises the further step of:
storing the created raw data message in a database (71, 72); and
retrieving the raw data message from the database (71, 72) for the generation of the automatic reply message.

5. The method of claim 1,
**characterised in**
**that** the method comprises the further step of:
extracting data relevant for the provision of said automatic reply message;
generating said automatic reply message in dependence on an identity of the calling party (2 to 5) and/or a subject assigned to said call received from the calling party (2 to 5).

6. A system (7) for providing an automatic reply message to a calling party (2 to 5) trying to get in connection with a called party (1) by using a communication media,
whereby the system (7) comprises a control unit (71) adapted to create a raw data message from data provided by the called party (1) and generate said automatic reply message by adaptation of said raw data message to the used communication media by means of a media unit (74) of the system (7) which is adapted to convert the raw data message into a media format, and wherein the control unit (71) is further adapted to fit one or more data elements of said data provided by the called party (1) into a pre-defined data structure; select a template of the raw data message according to the entries of the data structure; compose the raw data message by assembling the template with the entries of the data structure whereby the entries of the data structure are fit within the template to create the user-specific unique raw data message; and create said raw data message based on data related to a period of non-availability of the called party (1) and/or data related to an activity of the called party (1) and/or a substitute for the called party (1).

7. The system of claim 6,
**characterised in**
**that** said control unit (71) is adapted to initiate the provision of an automatic reply message if the control unit (71) detects, based on said data provided by the called party (1), that the called party (1) is not available.

8. The system of claim 6,
**characterised in**
**that** the control unit (71) is adapted to use the capabilities of servers (81, 82) or network nodes of an existing communications network (6, 8) for the provision of said automatic reply message to said calling party (2 to 5).

## Patentansprüche

1. Ein Verfahren zum Bereitstellen einer automatischen Antwortnachricht an einen anrufenden Teilnehmer (2 bis 5), welcher versucht, unter Verwendung eines Kommunikationsmediums eine Verbindung mit einem angerufenen Teilnehmer (1) herzustellen,
wobei das Verfahren die folgenden Schritte umfasst:
Erstellen einer Rohdatennachricht auf der Basis von von dem angerufenen Teilnehmer (1) bereitgestellten Daten; und
Erzeugen der besagten automatischen Antwortnachricht durch Anpassen der besagten Rohdatennachricht an das verwendete Kommunikationsmedium,
wobei die Rohdatennachricht in ein Medienformat umgesetzt wird,
wobei das Verfahren die folgenden weiteren Schritte umfasst:
Anpassen eines oder mehrerer Datenelemente der besagten von dem angerufenen Teilnehmer (1) bereitgestellten Daten an eine vorgegebene Datenstruktur;
Auswählen einer Schablone der Rohdatennachricht gemäß den Eintragungen der Datenstruktur;
Zusammenstellen der Rohdatennachricht durch Zusammenfügen der Schablone mit den Eintragungen der Datenstruktur, wobei die Eintragungen der Datenstruktur innerhalb der Schablone angepasst werden, um die benutzerspezifische eindeutige Rohdatennachricht zu erstellen; und
Erstellen der besagten Rohdatennachricht auf der Basis von Daten, welche sich auf einen Zeitraum der Nichtverfügbarkeit des angerufen Teilnehmers (1) beziehen, und/oder Daten, welche sich auf eine Aktivität des angerufenen Teilnehmers (1) und/oder eines Vertreters des angerufenen Teilnehmer (1) beziehen.

2. Das Verfahren nach Anspruch 1,
**dadurch gekennzeichnet,**
**dass** das Verfahren den folgenden weiteren Schritt umfasst:
Empfangen der besagten von dem angerufenen Teilnehmer (1) bereitgestellten Daten als Text- und/oder Video- und/oder Audio- und/oder Multimediadaten über ein Endgerät (10 bis 14) des angerufenen Teilnehmers (1); und
Speichern der empfangenen Daten in einer oder mehreren Datenbanken (71, 72), welche für das Erstellen der besagten Rohdatennachricht zugänglich sind.

3. Das Verfahren nach Anspruch 1,
**dadurch gekennzeichnet,**
**dass** das Verfahren die folgenden weiteren Schritte umfasst:
Ermitteln des Kommunikationsmediums, welches von dem besagten anrufenden Teilnehmer benutzt wird, und der Identität des besagten angerufenen Teilnehmers (1);
Zugreifen auf eine oder mehrere Datenbanken, welche die von dem angerufenen Teilnehmer (1) bereitgestellten Daten speichern, und Aufrufen der besagten Daten;
Senden der automatischen Antwortnachricht an den anrufenden Teilnehmer (2 bis 5) anhand des benutzten Kommunikationsmediums.

4. Das Verfahren nach Anspruch 1,
**dadurch gekennzeichnet,**
**dass** das Verfahren den folgenden weiteren Schritt umfasst:
Speichern der erstellten Rohdatennachricht in einer Datenbank (71, 72); und
Aufrufen der Rohdatennachricht aus der Datenbank (71, 72) für die Erzeugung der automatischen Antwortnachricht.

5. Das Verfahren nach Anspruch 1,
**dadurch gekennzeichnet,**
**dass** das Verfahren den folgenden weiteren Schritt umfasst:
Extrahieren von für die Bereitstellung der besagten automatischen Antwortnachricht relevanten Daten;
Erzeugen der besagten automatischen Antwortnachricht in Abhängigkeit von einer Identität des anrufenden Teilnehmers (2 bis 5) und/oder einem dem besagten von dem anrufenden Teilnehmer (2 bis 5) empfangenen Anruf zugeordneten Subjekt.

6. Ein System (7) zum Bereitstellen einer automatischen Antwortnachricht an einen anrufenden Teilnehmer (2 bis 5), welcher versucht, unter Verwendung eines Kommunikationsmediums eine Verbindung mit einem angerufenen Teilnehmer (1) herzustellen,
wobei das System (7) eine Steuerungseinheit (71) umfasst, welche dazu ausgelegt ist, auf der Basis von von dem angerufenen Teilnehmer (1) bereitgestellten Daten eine Rohdatennachricht zu erstellen und die besagte automatische Antwortnachricht durch Anpassen der besagten Rohdatennachricht an das verwendete Kommunikationsmedium mittels einer Medieneinheit (74) des Systems (7), welche dazu ausgelegt ist, die Rohdatennachricht in ein Medienformat umzusetzen, zu erzeugen, und wobei die Steuerungseinheit (71) weiterhin dazu ausgelegt ist, ein oder mehrere Datenelemente der besagten von dem angerufenen Teilnehmer (1) bereitgestellten Daten an eine vorgegebene Datenstruktur anzupassen; eine Schablone der Rohdatennachricht gemäß den Eintragungen der Datenstruktur auszuwählen, die Rohdatennachricht durch Zusammenfügen der Schablone mit den Eintragungen der Datenstruktur zusammenzustellen, wobei die Eintragungen der Datenstruktur innerhalb der Schablone angepasst werden, um die benutzerspezifische eindeutige Rohdatennachricht zu erstellen; und die besagte Rohdatennachricht auf der Basis von Daten, welche sich auf einen Zeitraum der Nichtverfügbarkeit des angerufen Teilnehmers (1) beziehen, und/oder Daten, welche sich auf eine Aktivität des angerufenen Teilnehmers (1) und/oder eines Vertreters des angerufenen Teilnehmer (1) beziehen, zu erstellen.

7. Das System nach Anspruch 6,
**dadurch gekennzeichnet,**
**dass** die besagte Steuerungseinheit (71) dazu ausgelegt ist, die Bereitstellung einer automatischen Antwortnachricht zu initiieren, wenn die Steuerungseinheit (71) auf der Basis der besagten von dem angerufenen Teilnehmer (1) bereitgestellten Daten erkennt, dass der angerufene Teilnehmer (1) nicht verfügbar ist.

8. Das System nach Anspruch 6,
**dadurch gekennzeichnet,**
**dass** die Steuerungseinheit (71) dazu ausgelegt ist, die Ressourcen von Servern (81, 82) oder Netzwerkknoten eines bestehenden Kommunikationsnetzwerks (6, 8) für die Bereitstellung der besagten automatischen Antwortnachricht an den besagten anrufenden Teilnehmer (2 bis 5) zu benutzen.

## Revendications

1. Procédé pour délivrer un message de réponse automatique à un appelant (2 à 5) qui essaie d'entrer en communication avec un appelé (1) en utilisant un support de communication,
le procédé comprenant les étapes suivantes :
Création d'un message de données brut à partir des données délivrées par l'appelé (1) ; et
Génération dudit message de réponse automatique en adaptant ledit message de données brut au support de communication utilisé par conversion du message de données brut en un format de support,
le procédé comprenant les étapes supplémentaires suivantes :
Insertion d'un ou plusieurs éléments de données desdites données délivrées par l'appelé (1) dans une structure de données prédéfinie ;
Sélection d'un modèle du message de données brut en fonction des entrées de la structure de données ;
Composition du message de données brut en assemblant le modèle avec les entrées de la structure de données, les entrées de la structure de données étant insérées dans le modèle pour créer le message de données brut unique spécifique à l'utilisateur ; et
Création dudit message de données brut en se basant sur les données en rapport avec une période de non disponibilité de l'appelé (1) et/ou les données en rapport avec une activité de l'appelé (1) et/ou un remplaçant pour l'appelé (1).

2. Procédé selon la revendication 1,
**caractérisé en ce**
**que** le procédé comprend l'étape supplémentaire suivante :
Réception desdites données délivrées par l'appelé (1) sous la forme de données textuelles et/ou vidéo et/ou audio et/ou multimédia par le biais d'un terminal (10 à 14) de l'appelé (1) ; et
Stockage des données reçues dans une ou plusieurs bases de données (71, 72) accessibles pour la création dudit message de données brut.

3. Procédé selon la revendication 1,
**caractérisé en ce**
**que** le procédé comprend les étapes supplémentaires suivantes :
Détermination du support de communication utilisé par ledit appelant et de l'identité dudit appelé (1) ;
Accès à une ou plusieurs bases de données qui stockent les données délivrées par l'appelé (1) et récupération desdites données ;
Envoi dudit message de réponse automatique à l'appelant (2 à 5) au moyen du support de communication utilisé.

4. Procédé selon la revendication 1,
**caractérisé en ce**
**que** le procédé comprend l'étape supplémentaire suivante :
Stockage du message de données brut créé dans une base de données (71, 72) ; et
Récupération du message de données brut auprès de la base de données (71, 72) pour générer le message de réponse automatique.

5. Procédé selon la revendication 1,
**caractérisé en ce**
**que** le procédé comprend l'étape supplémentaire suivante :
Extraction des données pertinentes pour la délivrance dudit message de réponse automatique ;
Génération dudit message de réponse automatique en fonction d'une identité de l'appelant (2 à 5) eUou d'un sujet associé audit appel reçu de la part de l'appelant (2 à 5).

6. Système (7) pour délivrer un message de réponse automatique à un appelant (2 à 5) qui essaie d'entrer en communication avec un appelé (1) en utilisant un support de communication,
le système (7) comprenant une unité de commande (71) adaptée pour créer un message de données brut à partir des données délivrées par l'appelé (1) et pour générer ledit message de réponse automatique en adaptant ledit message de données brut au support de communication utilisé au moyen d'une unité support (74) du système (7) qui est adaptée pour convertir le message de données brut en un format de support, et l'unité de commande (71) étant en outre adaptée pour insérer un ou plusieurs éléments de données desdites données délivrées par l'appelé (1) dans une structure de données prédéfinie; sélectionner un modèle de message de données brut en fonction des entrées de la structure de données ; composer le message de données brut en assemblant les modèles avec les entrées de la structure de données, les entrées de la structure de données étant insérées dans le modèle afin de créer le message de données brut unique spécifique à l'utilisateur ; et créer ledit message de données brut en se basant sur les données en rapport avec une période de non disponibilité de l'appelé (1) et/ou les données en rapport avec une activité de l'appelé (1) et/ou un remplaçant pour l'appelé (1).

7. Système selon la revendication 6,
**caractérisé en ce**
**que** ladite unité de commande (71) est adaptée pour initier la délivrance d'un message de réponse automatique si l'unité de commande (71) détecte, en se basant sur lesdites données délivrées par l'appelé (1), que l'appelé (1) n'est pas disponible.

8. Système selon la revendication 6,
**caractérisé en ce**
**que** l'unité de commande (71) est adaptée pour utiliser les capacités des serveurs (81, 82) ou des noeuds de réseau d'un réseau de communications (6, 8) existant pour délivrer ledit message de réponse automatique audit appelant (2 à 5).
